(19) **Europäisches Patentamt / European Patent Office / Office européen des brevets**

(11) **EP 2 134 940 B1**

(12) **FASCICULE DE BREVET EUROPEEN**

(45) Date de publication et mention
de la délivrance du brevet:
**20.06.2012 Bulletin 2012/25**

(51) Int Cl.:
*F01N 9/00* $^{(2006.01)}$　　*F01N 11/00* $^{(2006.01)}$
*F01N 3/20* $^{(2006.01)}$

(21) Numéro de dépôt: **08799903.3**

(22) Date de dépôt: **28.03.2008**

(86) Numéro de dépôt international:
**PCT/FR2008/050551**

(87) Numéro de publication internationale:
**WO 2008/129224 (30.10.2008 Gazette 2008/44)**

(54) **PROCEDE ET DISPOSITIF DE CONTROLE DE L'ETAT DE FONCTIONNEMENT D'UN CONVERTISSEUR CATALYTIQUE D'UNE LIGNE D'ECHAPPEMENT D'UN MOTEUR A COMBUSTION INTERNE**

VERFAHREN UND VORRICHTUNG ZUR STEUERUNG DES BETRIEBSZUSTANDES EINES KATALYSATORS DER ABGASSTRECKE EINES VERBRENNUNGSMOTORS

METHOD AND DEVICE FOR THE CONTROL OF THE OPERATING STATE OF A CATALYTIC CONVERTER OF THE EXHAUST LINE OF AN INTERNAL COMBUSTION ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.04.2007 FR 0754456**

(43) Date de publication de la demande:
**23.12.2009 Bulletin 2009/52**

(73) Titulaire: **Renault SAS**
**92100 Boulogne Billancourt (FR)**

(72) Inventeurs:
* **THOUVENEL, Nicolas**
  **91610 Ballancourt Sur Essonne (FR)**
* **FABRE, Nicolas**
  **75013 Paris (FR)**
* **EDELINE, Baptiste**
  **75015 Paris (FR)**

(56) Documents cités:
**EP-A- 1 052 385　　WO-A-2004/109072**
**DE-A1- 10 133 944　　FR-A- 2 761 732**
**US-A- 5 610 844**

# Description

La présente invention concerne le domaine du traitement des gaz d'échappement d'un moteur à combustion interne, par exemple de véhicule automobile. Le moteur à combustion interne peut fonctionner en mélange pauvre, notamment un moteur Diesel ou à essence.

Plus particulièrement, l'invention concerne le domaine du contrôle de l'état de fonctionnement d'un convertisseur catalytique dont est pourvue la ligne d'échappement du moteur.

Les moteurs à combustion interne produisent des gaz d'échappement qui contiennent des substances polluantes, telles que les oxydes d'azote, les hydrocarbures imbrûlés, et le monoxyde de carbone, qu'il est nécessaire de traiter avant le relâchement des gaz dans l'atmosphère.

Les véhicules automobiles sont souvent équipés d'un convertisseur catalytique disposé dans la ligne d'échappement du moteur, permettant d'oxyder le monoxyde de carbone et les hydrocarbures imbrûlés.

Les véhicules automobiles sont en outre généralement pourvus d'un dispositif de contrôle de l'état de fonctionnement du convertisseur catalytique, permettant de contrôler le bon fonctionnement du convertisseur catalytique et de signaler un dysfonctionnement au conducteur.

Parmi les causes de dysfonctionnement, le vieillissement du convertisseur catalytique engendre une baisse de l'efficacité de conversion des hydrocarbures imbrûlés et du monoxyde de carbone, en eau et en dioxyde de carbone, dûe entre autre à une diminution de la surface active de traitement des polluants au sein du convertisseur catalytique. Il en résulte une augmentation de la température d'amorçage thermique des réactions d'oxydation, notamment de la température à partir de laquelle l'efficacité de conversion est supérieure ou égale à 50%.

Le document EP-1 323 905 (RENAULT) propose un procédé de contrôle de l'état de fonctionnement d'un convertisseur catalytique d'une ligne d'échappement d'un moteur à combustion interne avec excitation du convertisseur par injection de carburant et contrôle de la valeur d'une variable représentative de la quantité de chaleur dégagée par une réaction d'oxydation au sein du convertisseur catalytique, en surveillant la température de fonctionnement du convertisseur catalytique et en procédant à l'injection de carburant à une température correspondant à une température d'amorçage thermique d'un convertisseur catalytique ayant un fonctionnement correct.

L'invention vise à améliorer le contrôle du fonctionnement d'un catalyseur de ligne d'échappement.

Un procédé selon le préambule de la revendication indépendante 1 est connu du document EP 1 052 385.

L'invention propose un contrôle d'état de fonctionnement d'un convertisseur catalytique particulièrement fiable et précis.

Le procédé de contrôle de l'état de fonctionnement d'un convertisseur catalytique d'une ligne d'échappement d'un moteur à combustion interne, comprend l'excitation du convertisseur par injection de carburant dans la ligne d'échappement et le contrôle de la valeur d'une variable représentative de la quantité de chaleur dégagée par une réaction d'oxydation au sein du convertisseur catalytique. On étalonne un modèle de température sur une température mesurée de fonctionnement du convertisseur catalytique. On procède à l'injection de carburant si les conditions de fonctionnement sont satisfaites. On calcule l'intégrale de la différence entre la température mesurée et la température modélisée en aval du convertisseur. La valeur de l'intégrale est représentative de l'état de fonctionnement du convertisseur catalytique.

Dans un mode de réalisation, le procédé comprend la comparaison de l'intégrale de la différence entre la température mesurée et la température modélisée en aval du convertisseur pendant une durée de test, avec une valeur de seuil pour en déduire un diagnostic de l'état de fonctionnement d'un convertisseur catalytique.

Dans un mode de réalisation, la valeur de seuil est une valeur de seuil variable en fonction des conditions de fonctionnement du moteur.

Dans un autre mode de réalisation, la valeur de seuil est une valeur fixe pour un point de fonctionnement du moteur.

Dans un mode de réalisation, si les conditions de fonctionnement ne sont pas satisfaites lors d'injections de carburant, le contrôle est déclaré négatif.

Dans un mode de réalisation, les conditions de fonctionnement lors de l'injection de carburant comprennent le fonctionnement satisfaisant des injecteurs principaux de carburant ou d'un injecteur de carburant à l'échappement, le fonctionnement satisfaisant d'une pompe d'alimentation en carburant et le fonctionnement satisfaisant de capteurs de température. On peut ainsi disposer de données représentatives du fonctionnement du convertisseur catalytique.

Dans un mode de réalisation, les conditions de fonctionnement lors de l'injection de carburant comprennent une température du convertisseur supérieure aux températures d'amorçage du convertisseur à l'état neuf et du convertisseur à l'état dégradé, et inférieure à une température élevée à laquelle un convertisseur à l'état dégradé fonctionne de façon proche d'un convertisseur à l'état neuf. La quantité de carburant injecté est comprise dans une plage.

Dans un mode de réalisation, l'injection de carburant dans la ligne d'échappement est effectuée par un injecteur débouchant entre les cylindres du moteur et le convertisseur. Il en résulte que des hydrocarbures vaporisés par ledit injecteur passent par le convertisseur catalytique. La quantité de carburant injecté peut être réduite. La durée du contrôle peut être abrégée.

Dans un mode de réalisation, on mesure la température en amont du convertisseur et on applique à la température un filtrage, dans le but de modéliser la température qu'aurait en sortie un catalyseur inerte (dépourvu de phase catalytique). Le filtrage peut être fonction du débit massique d'échappement, avec ou sans retard.

Dans un mode de réalisation, au cours de l'injection de carburant, le débit massique d'hydrocarbures imbrûlés est maintenu constant en entrée du convertisseur catalytique.

Le dispositif de contrôle de l'état de fonctionnement d'un convertisseur catalytique d'une ligne d'échappement d'un moteur à combustion interne comprend des moyens de détermination de la température régnant en amont et en aval du convertisseur, des moyens pour injecter du carburant dans la ligne d'échappement du moteur, des moyens d'étalonnage d'un modèle de température sur une température mesurée de fonctionnement du convertisseur catalytique et des moyens de calcul de l'intégrale de la différence entre la température mesurée et la température modélisée en aval du convertisseur. Les moyens de détermination de la température régnant en amont et en aval du convertisseur peuvent comprendre un capteur disposé en amont du convertisseur et un estimateur de la température en aval du convertisseur.

Dans un mode de réalisation, le dispositif est embarqué à bord d'un véhicule.

Dans un autre mode de réalisation, le dispositif comprend un outil de test distinct du véhicule, l'outil de test comprenant les moyens d'étalonnage et les moyens de calcul.

Grâce à l'invention, on bénéficie d'un contrôle de l'état de fonctionnement du convertisseur catalytique efficace et adaptable à des types différents de véhicules. Le contrôle peut être effectué sur un véhicule à l'arrêt, moteur tournant, auquel on relie un outil de diagnostic.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un moteur à combustion interne équipé d'une ligne d'échappement pourvue d'un convertisseur catalytique associé à un dispositif de contrôle ;
- la figure 2 est une variante de la figure 1 ;
- la figure 3 montre une courbe de taux d'efficacité de conversion des hydrocarbures imbrûlés en fonction de la température, définissant ainsi une zone de fonctionnement préférée du contrôle ; et
- la figure 4 est un organigramme des étapes de fonctionnement.

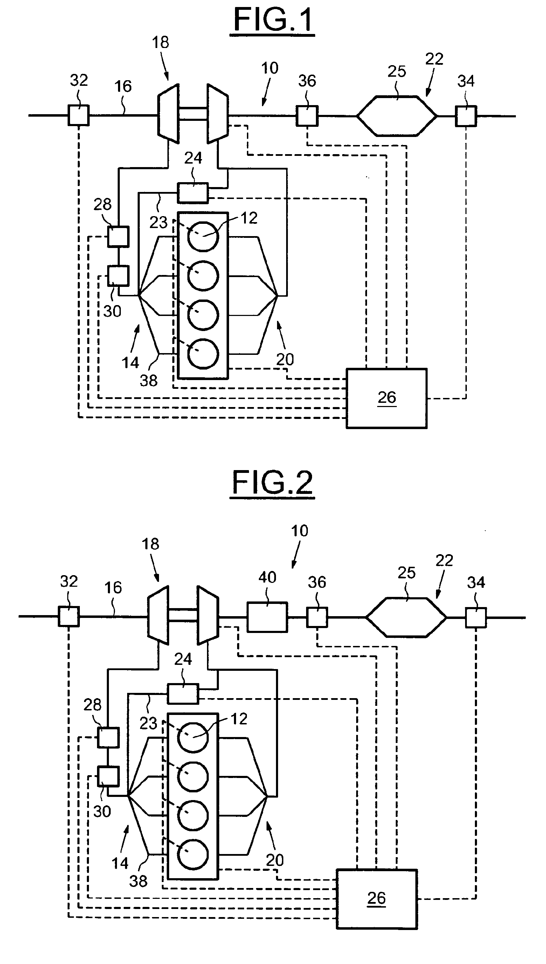

Comme on peut le voir sur la figure 1, un moteur à combustion interne 10 est pourvu de quatre cylindres 12 disposés en ligne. Les cylindres 12 sont alimentés en air par l'intermédiaire d'un répartiteur d'admission 14, luimême alimenté par une conduite 16 pourvue d'un filtre à air (non représenté) et d'un turbocompresseur 18 de suralimentation du moteur en air.

Un collecteur d'échappement 20 récupère les gaz d'échappement issus de la combustion et les évacue vers l'extérieur en passant par la turbine du turbocompresseur 18 et par une ligne d'échappement 22.

Un circuit de recirculation 23 des gaz d'échappement, comprenant une partie du circuit d'alimentation du moteur en air et une partie du circuit d'échappement est configuré pour récupérer une partie des gaz d'échappement et les réinjecter dans le répartiteur d'admission 14 pour limiter la quantité d'oxydes d'azote produits par la combustion tout en évitant la formation de fumée dans les gaz d'échappement. Le circuit de recirculation 23 peut comporter une soupape de réglage 24 du flux de gaz d'échappement recirculés.

La ligne d'échappement 22 comprend un filtre à particules (non représenté) et un convertisseur catalytique 25 assurant une oxydation des molécules réductrices, notamment le monoxyde de carbone CO et les hydrocarbures imbrûlés HC.

Le convertisseur catalytique 25 peut être de type classique et ne sera donc pas décrit en détail par la suite. Le convertisseur catalytique 25 peut posséder une structure monolithique. Le convertisseur catalytique 25 peut être pourvu de canaux imprégnés d'une phase catalytique, par exemple un métal précieux, et présentant une grande surface de contact avec les gaz d'échappement.

Le monolithe entrant dans la constitution du convertisseur catalytique 25 peut être intégré au filtre à particules ou à un pièges à oxydes d'azote. On peut ainsi réaliser un couplage entre le post traitement des gaz d'échappement par oxydation du monoxyde de carbone et des hydrocarbures imbrûlés HC au post-traitement des particules et des oxydes d'azote NOx.

Le moteur 10 comprend un calculateur embarqué 26 capable d'assurer le contrôle de fonctionnement dudit moteur 10, notamment le réglage de ses paramètres de fonctionnement ainsi que le contrôle de fonctionnement du convertisseur catalytique 25.

Le moteur 10 peut être pourvu d'un capteur 28 de pression de suralimentation, d'un capteur 30 de température d'admission d'air dans le répartiteur d'admission 14 et d'un capteur de débit 32 disposé dans la conduite 16 d'alimentation. Ces capteurs et les principaux organes fonctionnels du moteur et du circuit d'alimentation en air sont reliés au calculateur 26.

Le calculateur comprend des moyens de mémorisation dans lesquels sont stockés un ensemble de données obtenues par apprentissage préalable correspondant notamment à des valeurs de seuil de détection de dysfonctionnements et des moyens logiciels de contrôle de la quantité de chaleur dégagée par la réaction chimique engendrée par la post-injection au sein du convertisseur par comparaison avec des valeurs de seuil.

Le dispositif comprend également un capteur 34 de mesure de la température des gaz d'échappement en aval du convertisseur 25, préalablement placé dans le flux de gaz et le plus proche possible du convertisseur 25, et un capteur 36 de mesure de la température des gaz d'échappement en amont du convertisseur 25. Les capteurs 34 et 36 sont reliés au calculateur 26. Les capteurs 34 et 36 peuvent comprendre des thermistances.

Dans le mode de réalisation illustré sur la figure 1, l'injection de carburant réalisée en vue du contrôle de l'état de fonctionnement du convertisseur catalytique est assurée par les injecteurs 38 prévus pour injecter du carburant dans les cylindres 12. Les injecteurs 38 sont également commandés par le calculateur 26.

Dans le mode de réalisation illustré sur la figure 2, le dispositif comprend un injecteur supplémentaire 40 disposé entre la turbine du turbocompresseur 18 et le capteur 36 en amont du convertisseur 25. L'injecteur supplémentaire 40 est capable d'injecter du carburant, par exemple sous forme vaporisée dans le flux de gaz d'échappement. L'injecteur supplémentaire 40 permet d'augmenter temporairement lors d'un test de contrôle la quantité d'hydrocarbures imbrûlés dans les gaz d'échappement.

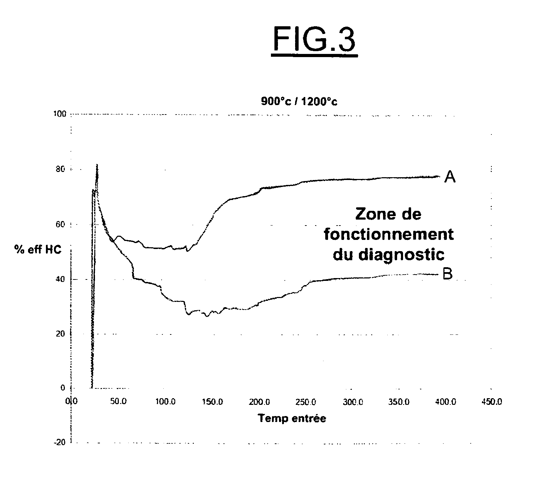

Sur la figure 3, sont illustrées deux courbes représentatives du taux de conversion des hydrocarbures imbrûlés en fonction de la température d'entrée. La courbe A ou courbe supérieure est représentative du fonctionnement d'un convertisseur catalytique en bon état. La courbe B ou courbe inférieure est représentative du fonctionnement d'un convertisseur catalytique en mauvais état. L'on voit qu'à partir d'une température de l'ordre de 250°, les courbes A et B présentent une zone relativement stable monotone légèrement croissante avec un écart sensiblement constant de l'ordre de 30 à 40 points entre l'efficacité de conversion du catalyseur en bon état qui évolue entre 75 et 80 %, et l'efficacité offerte par le catalyseur en mauvais état de l'ordre de 40 à 45 %. Cette zone est comprise entre des températures de l'ordre de 250 à 400°. A des températures plus faibles, par exemple de l'ordre de 150 à 250°, l'écart entre les courbes A et B peut être encore plus important. Néanmoins, les variations plus brutales du taux d'efficacité rendent le diagnostic possible mais légèrement plus difficile. On choisira donc de préférence une température du convertisseur catalytique supérieure à 250° comme condition de fonctionnement du procédé de contrôle.

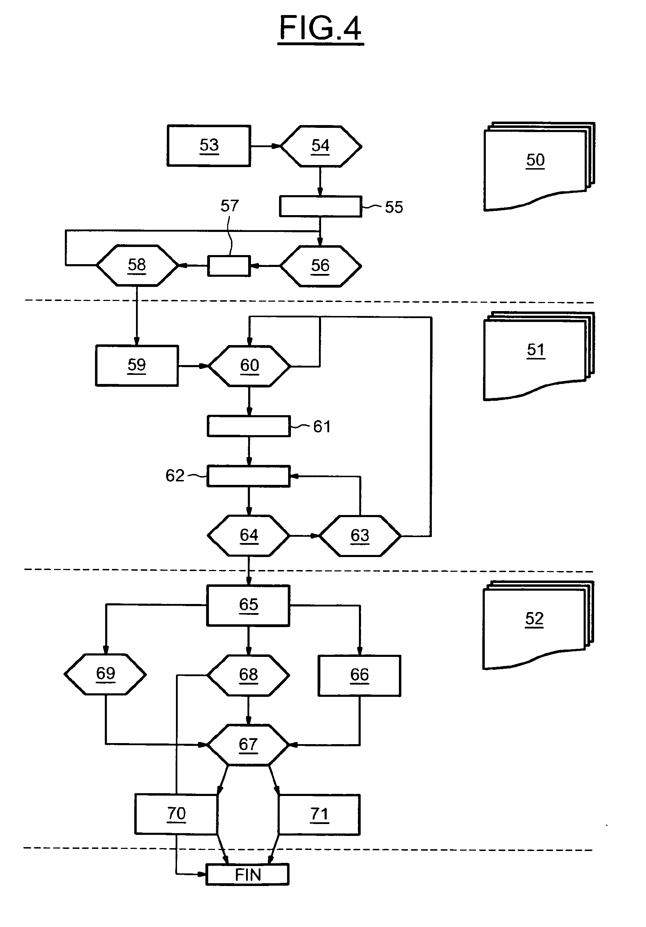

Comme illustré sur la figure 4, le procédé comprend trois étapes principales respectivement de recalage 50, d'activation 51 de l'injection tardive et de traitement 52 de l'information thermique 3. La première étape 50 permet de recaler la température modélisée sur la température mesurée afin de ne mesurer qu'un écart relatif durant la séquence d'injection tardive à réception d'une requête de diagnostic 53. L'étape 50 permet aussi de gommer les dispersions des capteurs de température du système. La première étape 50 permet de mémoriser la différence entre une température modélisée et une température mesurée pour un capteur donné. Cette différence peut ensuite être réintégrée pour construire la température modélisée lors de la troisième étape. La première étape 50 comprend la vérification de conditions d'apprentissage 54, par exemple plage de fonctionnement moteur, stabilité de l'écart entre température modélisée en sortie du convertisseur et température mesurée en sortie du convertisseur, l'initialisation 55 d'un compteur, la vérification de conditions d'apprentissage 56 qui peuvent être semblables aux conditions d'apprentissage 54 permettant de décrémenter 57 le compteur puis lorsque le compteur est à zéro 58 de passer à la deuxième étape 51 en générant une requête d'activation 59 de l'injection tardive. En d'autres termes, on vérifie que les conditions d'entrée sont satisfaites pendant la durée entre l'initialisation 55 et la mise à zéro 58.

La deuxième étape 51 d'activation d'injection tardive est lancée après vérification de paramètres caractéristiques du fonctionnement du moteur et du convertisseur catalytique, notamment la température aux bornes du convertisseur, le débit massique des gaz d'échappement, etc. La vérification de ces paramètres appelés « conditions de diagnostic » permet de garantir une certaine stabilité des paramètres lors du diagnostic et ainsi une répétabilité du diagnostic. Les conditions de diagnostic 60 doivent rester satisfaites pendant une durée déterminée décomptée par un compteur faisant l'objet d'une initialisation 61 et d'un décompte 62. Tant que le compteur n'est pas à zéro les conditions de diagnostic sont vérifiées à nouveau par un test 63.

L'injection est commandée lorsque le compteur est à zéro d'après un test 64. L'injection est activée à l'étape 65. Plus particulièrement, on peut prévoir de respecter des conditions de température du convertisseur catalytique. La température du convertisseur catalytique doit être supérieure aux températures d'amorçage d'un convertisseur catalytique en bon état et d'un convertisseur catalytique dégradé à discriminer. La température du convertisseur doit se situer dans la zone de diagnostic matérialisée sur la figure 3, par exemple comprise entre 250 et 400°C. La quantité de carburant injecté tardivement doit être suffisante pour permettre de bien distinguer le catalyseur efficace du catalyseur dégradé. La quantité de carburant de post-injection doit être inférieure à un plafond afin de ne pas inhiber les réactions de conversion catalytique par empoisonnement de la phase catalytique, par exemple dû à une trop forte concentration d'hydrocarbures en amont du convertisseur catalytique.

En outre, si le catalyseur a la capacité de stocker des hydrocarbures à froid, il est préférable de s'assurer que les hydrocarbures stockés à froid ont été au préalable déstockés. Dans le cas contraire, la maîtrise de la quantité d'hydrocarbures participant à la réaction serait compromise et dès lors il existerait un risque pour ce diagnostic de décréter bon, un catalyseur dégradé. Une condition sur la température en entrée et/ou en sortie du convertisseur catalytique permet de s'affranchir de ce risque.

Dans un mode de réalisation, le débit massique d'hydrocarbures imbrûlés est maintenu constant en amont du convertisseur 25 pendant la durée de l'injection tardive. L'injection tardive est stoppée lorsqu'un critère d'arrêt du test est rencontré, par exemple suite à un levé de pied du conducteur. Si la température aval mesurée par le capteur 34 sort de la plage prévue, le test est arrêté. Dans le cas contraire, le test est poursuivi. La quantité injectée peut être modulée par le régime moteur et éventuellement par le taux de recyclage de gaz d'échappement selon l'équation suivante :

$$Q_{inj} = \frac{constante}{(1 - \tau_{EGR})x\ n}$$

avec n le régime du moteur et $\tau_{EGR}$ le taux de recyclage des gaz d'échappement.

Dans un autre mode de réalisation, la vanne de recyclage des gaz d'échappement 24 est fermée pendant l'étape 2. Dans ce cas, la quantité injectée est fonction du régime du moteur selon l'équation suivante :

$$Q_{inj} = \frac{constante}{n}$$

La troisième étape 52 de traitement de l'information thermique peut débuter en même temps que l'injection tardive. La troisième étape 52 permet de renvoyer un résultat de diagnostic élémentaire. Le calculateur 26 effectue le calcul 66 du critère : l'intégrale sur la durée du test de la différence entre la température mesurée et la température modélisée en aval du convertisseur, selon :

$$\int_{dur\acute{e}edutest} \left(T_{mes} - T_{mod}\right)dt$$

La valeur ainsi calculée est ensuite comparée à l'étape 67 à un seuil. Le résultat de la comparaison détermine si le convertisseur catalytique 25 assure un niveau de dépollution satisfaisant. Le convertisseur catalytique 25 est déclaré bon pour le service 70 ou dégradé 71 avec affichage correspondant, par exemple au tableau de bord du véhicule.

Selon un mode de réalisation particulier, plusieurs seuils peuvent être enregistrés dans une cartographie qui dépend des paramètres du convertisseur catalytique, notamment la température en amont, la température en aval, le débit massique des gaz, la quantité d'hydrocarbures injectés, etc.

Dans un autre mode de réalisation, le diagnostic est établi pour un point de fonctionnement du moteur déterminé. Des conditions d'entrée dans le diagnostic doivent alors être vérifiées pendant un temps fixé avant de lancer la deuxième étape de post-injection.

Dans un mode de réalisation, suite au lancement du test, certaines conditions de fonctionnement telles que les paramètres du moteur et du catalyseur, sont surveillées pendant la durée du test. Ces conditions de fonctionnement permettent de s'assurer que le test se déroule conformément à son cahier des charges. Dans le cas où ces conditions ne sont pas respectées, le test est déclaré échoué et aucun résultat de test n'est fourni en sortie. Les conditions de fonctionnement peuvent être vérifiées par un test de température 68, voir aussi figure 3.

Un modèle de catalyseur inerte peut être mis en oeuvre par le calculateur afin d'estimer en permanence la température qui régnerait en sortie d'un catalyseur inerte. Ce modèle reçoit en entrée les variables d'entrée telles que la température d'entrée et le débit massique d'échappement et retourne en sortie la température modélisée de sortie du convertisseur catalytique. L'information de température en amont du convertisseur peut être filtrée par un filtre de premier ordre dont la constante de temps est déterminée par une cartographie qui dépend du débit massique d'échappement.

Dans un autre mode de réalisation, la constante de temps du filtre est déterminée au préalable et reste fixe.

A la sortie du filtre, le signal est retardé d'une durée qui dépend du débit massique des gaz d'échappement. Enfin, le décalage de température appris lors de la première étape est ajouté à la température issue des deux premiers traitements. On obtient ainsi la température modélisée de sortie du convertisseur.

Afin d'assurer un bon fonctionnement du diagnostic, le calculateur 26 s'assure que l'injecteur est en bon fonctionnement, que la pompe d'alimentation en carburant est en bon fonctionnement, que le système d'injection de carburant à l'échappement lorsqu'il est présent est en bon fonctionnement, que les capteurs de température en amont et en aval du catalyseur sont en bon fonctionnement, et que la régulation du recyclage des gaz d'échappement est en bon fonctionnement. Ces critères d'arrêt de diagnostic peuvent faire l'objet d'un test 69, parallèlement au test 68 et au calcul 66.

Plus particulièrement, le procédé de contrôle peut être réalisé à l'arrêt du véhicule, moteur tournant. A cette fin, un outil de diagnostic, distinct du véhicule et pouvant être connecté à celui-ci, par exemple par un connecteur de diagnostic, peut être prévu. Dans ce cas, les trois étapes du procédé sont commandées par l'outil de test, l'outil de test comprenant les moyens d'étalonnage du modèle de température, les moyens de calcul de l'intégrale de la différence entre la température mesurée et la température modélisée en aval du convertisseur et des moyens pour commander l'injection du carburant par l'intermédiaire du calculateur 26.

En d'autres termes, on étalonne la modélisation de la température de sortie du convertisseur sur une température mesuré. On vérifie si les conditions nécessaires au diagnostic sont réalisées. Si c'est le cas on active une injection de carburant supplémentaire, soit une injection tardive par les injecteurs des cylindres à des phases d'injection ne créant pas de couple, par exemple à un angle vilebrequin supérieur à 90°, soit en mettant en oeuvre un injecteur supplémentaire ou vaporisateur placé hors des cylindres, par exemple sur le collecteur d'échappement et pouvant éventuellement servir également à l'aide à la régénération d'un filtre à particules. Lors de l'injection supplémentaire, la vanne de recirculation des gaz brûlés peut être forcée en position fermée ou maintenue en état de fonctionnement. L'injection supplémentaire est effectuée pendant une durée déterminée. Simultanément, on mesure la température et on calcule l'intégrale de la différence entre la température mesurée et la température estimée en aval du convertisseur. Lorsque la valeur résultant du calcul de l'intégrale est supérieure à un seuil, le convertisseur est déclaré bon pour le service. Dans le cas contraire, le catalyseur est déclaré comme étant dégradé.

On bénéficie ainsi d'un contrôle particulièrement efficace du taux de dépollution assuré par un convertisseur catalytique.

## Revendications

**1.** Procédé de contrôle de l'état de fonctionnement d'un convertisseur catalytique (25) d'une ligne d'échappement d'un moteur à combustion interne (10), comprenant l'excitation du convertisseur (25) par injection de carburant dans la ligne d'échappement (12), le contrôle de la valeur d'une variable représentative de la quantité de chaleur dégagée par une réaction d'oxydation au sein du convertisseur catalytique (25), et l'étalonnage d'un modèle de température sur une température mesurée de fonctionnement du convertisseur catalytique, **caractérisé en ce que** l'on procède à l'injection de carburant si des conditions de fonctionnement sont satisfaites, et l'on calcule l'intégrale de la différence entre la température mesurée et la température modélisée en aval du convertisseur, les conditions de fonctionnement lors de l'injection de carburant comprenant le fonctionnement satisfaisant des injecteurs principaux de carburant (38) ou d'un injecteur de carburant à l'échappement (40), le fonctionnement satisfaisant d'une pompe d'alimentation en carburant et le fonctionnement satisfaisant de capteurs de température.

**2.** Procédé selon la revendication 1, comprenant la comparaison de l'intégrale de la différence entre la température mesurée et la température modélisée en aval du convertisseur (25) pendant une durée de test, avec une valeur de seuil pour en déduire un diagnostic de l'état de fonctionnement du convertisseur catalytique (25).

**3.** Procédé selon la revendication 2, dans lequel la valeur de seuil est une valeur de seuil variable en fonction des conditions de fonctionnement du moteur (10), ou une valeur fixe pour un point de fonctionnement du moteur (10).

**4.** Procédé selon l'une quelconque des revendications précédentes, dans lequel les conditions de fonctionnement lors de l'injection de carburant comprennent une température du convertisseur (25) supérieure aux températures d'amorçage du convertisseur à l'état neuf et du convertisseur à l'état dégradé, et inférieure à une température élevée à laquelle un convertisseur à l'état dégradé fonctionne de façon proche d'un convertisseur à l'état neuf, et/ou la quantité de carburant injectée est comprise dans une plage.

**5.** Procédé selon l'une quelconque des revendications précédentes, dans lequel l'injection de carburant dans la ligne d'échappement est effectuée par un injecteur (40) débouchant entre les cylindres du moteur et le convertisseur.

**6.** Procédé selon l'une quelconque des revendications précédentes, dans lequel on mesure la température en amont du convertisseur et on applique à la température un filtrage, le filtrage étant fonction du débit massique d'échappement, avec ou sans retard.

**7.** Procédé selon l'une quelconque des revendications précédentes, dans lequel au cours de l'injection de carburant, le débit massique d'hydrocarbures imbrûlés est maintenu constant en entrée du convertisseur (25).

**8.** Dispositif de contrôle de l'état de fonctionnement d'un convertisseur catalytique (25) d'une ligne d'échappement d'un moteur à combustion interne (10) pour la mise en oeuvre d'un procédé selon l'une quelconque des revendications 1 à 7, comprenant des moyens de détermination (36 ; 26, 34) de la température régnant en amont et en aval du convertisseur (25), des moyens pour injecter du carburant dans la ligne d'échappement (22) du moteur, des moyens d'étalonnage d'un modèle de température sur une température mesurée de fonctionnement du convertisseur catalytique (25), et des moyens de calcul de l'intégrale de la différence entre la température mesurée et la température modélisée en aval du convertisseur (25).

**9.** Dispositif selon la revendication 8, embarqué à bord d'un véhicule.

**10.** Dispositif selon la revendication 8, faisant partie d'un outil de test distinct d'un véhicule.

## Claims

**1.** Method for checking the operating state of a catalytic converter (25) of an exhaust line of an internal combustion engine (10), involving energizing the converter (25) by injecting fuel into the exhaust line (12), checking the value of a variable representative of the amount of heat given off by an oxidation reaction within the catalytic converter (25), and calibrating a temperature model on a measured operating temperature of the catalytic converter, **characterized in that** fuel is injected if operating conditions are met, and the integral of the difference between the measured temperature and the modelled temperature downstream of the converter is calculated, the operating conditions during the injection of fuel including satisfactory operation of the main fuel injector (38) or of an injector injecting fuel into the exhaust (40), satisfactory operation of a fuel feed pump and satisfactory operation of temperature sensors.

2. Method according to Claim 1, involving comparing the integral of the difference between the measured temperature and the modelled temperature downstream of the converter (25) over a test period against a threshold value in order from this to deduce a diagnosis regarding the operating state of the catalytic converter (25).

3. Method according to Claim 2, in which the threshold value is a threshold value that can vary as a function of the operating conditions of the engine (10), or a value that is fixed for an operating point of the engine (10).

4. Method according to any one of the preceding claims, in which the operating conditions during the injection of fuel include a converter temperature (25) higher than the light-off temperatures of the converter when new and of the converter in the degraded state, and lower than a high temperature at which a converter in the degraded state operates in a way close to that of a converter when new and/or the amount of fuel injected is always within a range.

5. Method according to any one of the preceding claims, in which the injection of fuel into the exhaust line is performed by an injector (40) delivering between the cylinders of the engine and the converter.

6. Method according to any one of the preceding claims, in which the temperature is measured upstream of the converter and filtering is applied to the temperature, the filtering being a function of the exhaust mass flow rate, with or without a delay.

7. Method according to any one of the preceding claims, in which, while fuel is being injected, the mass flow rate of unburned hydrocarbons is kept constant at the inlet to the converter (25).

8. Device for checking the operating state of a catalytic converter (25) of an exhaust line of an internal combustion engine (10) for implementing a method according to any one of Claims 1 to 7, including means (36; 26, 34) of determining the temperature upstream and downstream of the converter (25), means for injecting fuel into the exhaust line (22) of the engine, means of calibrating a temperature model on a measured operating temperature of the catalytic converter (25), and means of calculating the integral of the difference between the measured temperature and the modelled temperature downstream of the converter (25).

9. Device according to Claim 8, carried on board a vehicle.

10. Device according to Claim 8, that forms parts of a test tool distinct from a vehicle.


**Patentansprüche**

1. Verfahren zur Kontrolle des Betriebszustands eines Katalysators (25) einer Auspuffanlage eines Verbrennungsmotors (10), das die Anregung des Katalysators (25) durch Kraftstoffeinspritzung in die Auspuffanlage (12) und die Kontrolle des Werts einer für die durch eine Oxidationsreaktion im Katalysator (25) abgegebene Wärmemenge repräsentativen Variablen und die Kalibrierung eines Temperaturmodells auf eine gemessene Betriebstemperatur des Katalysators enthält, **dadurch gekennzeichnet, dass** die Kraftstoffeinspritzung durchgeführt wird, wenn Betriebsbedingungen erfüllt sind, und das Integral der Differenz zwischen der gemessenen Temperatur und der modellisierten Temperatur hinter dem Katalysator berechnet wird, wobei die Betriebsbedingungen bei der Kraftstoffeinspritzung den zufriedenstellenden Betrieb der Hauptkraftstoffeinspritzdüsen (38) oder einer Kraftstoffeinspritzdüse am Auspuff (40), den zufriedenstellenden Betrieb einer Kraftstoffzufuhrpumpe und den zufriedenstellenden Betrieb von Temperaturmeßfühlern enthalten.

2. Verfahren nach Anspruch 1, das den Vergleich des Integrals der Differenz zwischen der gemessenen Temperatur und der modellisierten Temperatur hinter dem Katalysator (25) während einer Testdauer mit einem Schwellwert enthält, um daraus eine Diagnose des Betriebszustands des Katalysators (25) abzuleiten.

3. Verfahren nach Anspruch 2, bei dem der Schwellwert ein abhängig von den Betriebsbedingungen des Motors (10) variabler Schwellwert oder ein für einen Arbeitspunkt des Motors (10) fester Wert ist.

**4.** Verfahren nach einem der vorhergehenden Ansprüche, bei dem die Betriebsbedingungen bei der Kraftstoffeinspritzung eine Temperatur des Katalysators (25) höher als die Aktivierungstemperaturen des Katalysators im Neuzustand und des Katalysators im beschädigten Zustand und niedriger als eine hohe Temperatur enthalten, bei der ein Katalysator im beschädigten Zustand ähnlich wie ein Katalysator im Neuzustand arbeitet, und/oder die Menge an eingespritztem Kraftstoff in einem Bereich enthalten ist.

**5.** Verfahren nach einem der vorhergehenden Ansprüche, bei dem die Kraftstoffeinspritzung in die Auspuffanlage von einer Einspritzdüse (40) durchgeführt wird, die zwischen den Zylindern des Motors und dem Katalysator mündet.

**6.** Verfahren nach einem der vorhergehenden Ansprüche, bei dem die Temperatur vor dem Katalysator gemessen und an der Temperatur eine Filterung angewendet wird, wobei die Filterung vom Auspuff-Massendurchsatz mit oder ohne Verzögerung abhängt.

**7.** Verfahren nach einem der vorhergehenden Ansprüche, bei dem während der Kraftstoffeinspritzung der Massendurchsatz von nicht verbrannten Kohlenwasserstoffen am Eingang des Katalysators (25) konstant gehalten wird.

**8.** Vorrichtung zur Kontrolle des Betriebszustands eines Katalysators (25) einer Auspuffanlage eines Verbrennungsmotors (10) zur Durchführung eines Verfahrens nach einem der Ansprüche 1 bis 7, die Einrichtungen (36; 26, 34) zur Bestimmung der vor und hinter dem Katalysator (25) herrschenden Temperatur, Einrichtungen zum Einspritzen von Kraftstoff in die Auspuffanlage (22) des Motors, Einrichtungen zum Kalibrieren eines Temperaturmodells auf eine gemessene Betriebstemperatur des Katalysators (25) und Einrichtungen zur Berechnung des Integrals der Differenz zwischen der gemessenen Temperatur und der modellisierten Temperatur hinter dem Katalysator (25) enthält.

**9.** Vorrichtung nach Anspruch 8, die in ein Fahrzeug eingebaut ist.

**10.** Vorrichtung nach Anspruch 8, die Teil eines getrennten Testwerkzeugs eines Fahrzeugs ist.

## FIG.1

## FIG.2

# FIG.3

**900°c / 1200°c**

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1323905 A, RENAULT
- EP 1052385 A